(19) Europäisches Patentamt / European Patent Office / Office européen des brevets

(11) **EP 3 925 451 B1**

(12) **EUROPEAN PATENT SPECIFICATION**

(45) Date of publication and mention
of the grant of the patent:
**30.11.2022 Bulletin 2022/48**

(21) Application number: **21179534.9**

(22) Date of filing: **15.06.2021**

(51) International Patent Classification (IPC):
**A23D 7/005** (2006.01)      **A23L 33/00** (2016.01)
**A23L 35/00** (2016.01)

(52) Cooperative Patent Classification (CPC):
**A23D 7/0053; A23L 33/40; A23L 35/10**

(54) **NUTRITIONAL EMULSION WITH EASILY-SWALLOWED VISCOUS TEXTURE AND BIOACTIVE INGREDIENTS**

NAHRUNGSEMULSION MIT LEICHT NEUTRALISIERTER VISKOSER TEXTUR UND BIOAKTIVEN INHALTSSTOFFEN

ÉMULSION NUTRITIONNELLE À TEXTURE VISQUEUSE FACILE À AVALER ET INGRÉDIENTS BIOACTIFS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.06.2020 LT 2020530**

(43) Date of publication of application:
**22.12.2021 Bulletin 2021/51**

(73) Proprietors:
  • **Kaunas University of Technology**
    **44249 Kaunas (LT)**
  • **Lithuanian University of Health Sciences**
    **44307 Kaunas (LT)**

(72) Inventors:
  • **Leskauskaite, Daiva**
    **44211 Kaunas (LT)**
  • **Venskutonis, Petras**
    **51370 Kaunas (LT)**
  • **Kersiene, Milda**
    **44225 Kaunas (LT)**
  • **Jasutiene, Ina**
    **50393 Kaunas (LT)**
  • **Eisinaite, Viktorija**
    **54307 Giraites k. Kauno raj. (LT)**
  • **Lesauskaite, Vita**
    **44229 Kaunas (LT)**
  • **Damuleviciene, Gyte**
    **48275 Kaunas (LT)**
  • **Knasiene, Jurgita**
    **44307 Kaunas (LT)**

(74) Representative: **Klimaitiene, Otilija**
    **AAA Law**
    **P.O.Box 33**
    **A. Gostauto street 40B**
    **03163 Vilnius (LT)**

(56) References cited:
    **EP-B1- 1 935 258      WO-A1-2018/178270**
    **CA-A1- 3 122 323      JP-B2- 3 257 983**
    **US-B2- 10 583 097**

**Description**

FIELD OF INVENTION

The invention belongs to the field of food technology. More specifically, it is a nutritious double-emulsion with a viscous, easy-to-swallow texture, distributed with balanced nutrients and bio-active ingredients, and adapted to provide balanced nutrition for the elderly and people with swallowing disorders.

TECHNICAL LEVEL

Certain groups of people (for example, elderly people, or people with dysphagia and swallowing disorders) need a ration/diet that provides enough nutrients to meet their nutritional needs, meanwhile maintaining an adequate energy balance with the consumed food. Several types of such nutrition/foods are known as: nutrient-dense foods, fortified foods, and dietary supplements. Food can also be fortified by adding additional nutrients or bioactive substances. Such foods can be successfully used for a complete and balanced diet of these groups of people.

Adding bioactive additives (vitamins, phenolic antioxidants) to food has several limitations, as bioactive compounds can degrade and / or be undesirably altered during food processing and storage, due to their high sensitivity to heat, oxygen, acidity (pH) and other environmental conditions. Another problem with incorporating mentioned bioactive compounds into foods is their uneven distribution throughout the product, as the amount of compounds added is generally very low. Capsule (encapsulation) is currently recognized as the best strategy for incorporating bioactive compounds into fortified foods [1]. Water-in-oil-in-water (W1/O/W2) double-emulsion (DE) is one of the most attractive encapsulation systems for bioactive compounds. The advantage of this double-emulsion is its unique morphology, as it is a common multifunctional carrier that allows the encapsulation of different hydrophilic and lipophilic molecules in the same particle [2]. Another advantage is the high viscosity of the double-emulsion. The most widely known guideline by the National Dysphagia Diet divides dysphagia fluids into thin (1-50 mPa s), nectar (50-350 mPa s), honey (350-1750 mPa s) and spoon-thick or pudding-like (> 1750 mPa s) according to their shear viscosity, when measured at the shear rate of 50 $s^{-1}$, at 25 °C. According to this classification, the viscosity of double-emulsion (DE) corresponds to level III (of honey), therefore, DE can be successfully used in food for the elderly with dysphagia and swallowing disorders [3], [4].

In recent years, double-emulsions has been investigated as a carrier for bioactive compounds. Gharehbeglou et al. [5] encapsulated oleuropein in double nanoemulsions stabilized with pectin-whey protein concentrate complex. Double emulsions with ethanol/water solution of resveratrol embedded in the internal aqueous phase were characterized by high encapsulation efficiency, good stability and suitable rheological properties [6]. In addition, Aditya et al. [7] developed a W1/O/W2 emulsion to simultaneously encapsulate hydrophilic catechin and hydrophobic curcumin. WOW has also been reported to be a good matrix for vitamins C [8] and B12 [9]. In another study [10], stable WOW with encapsulated beet juice with high encapsulation efficiency (>98%) was prepared using milk protein and polyglycerol polycinoleate.

In the search for suitable encapsulation means, the most important parameter of the system is the protection of the encapsulated bioactive compound until it reaches the target physiological sites. There are few studies indicating that DE provides effective protection of vitamins in the gastrointestinal tract. Encapsulation of vitamin B12 in double emulsions has shown greater than 96% efficacy and prevented vitamin loss in the stomach during *in vitro* digestion [11]. In another study, Andrade et al. [12] incorporated hydrophobic vitamin D3 and hydrophilic vitamin B12 molecules into DE and demonstrated that the physical intrinsic properties of the DE phase affected lipid digestion and vitamin release kinetics during *in vitro* digestion.

In addition, *in vitro* digestion studies of DE with extracts rich in polyphenols show that the release of encapsulated compounds depends on the composition of DE, the method of preparation of the double emulsion and the nature of the encapsulated compounds. Huang and Zhou [13] found that the double emulsion can slow down the release of anthocyanins in the stomach and intestine during the first 20 minutes from the emulsion made with black rice extract,. A double emulsion with beet extract described by Kaimainen et al. [14], showed a gradual release of bioactive compounds during gastric digestion.

According to patent literature sources, emulsification and microencapsulation have been known for quite some time in different industries (food, agrochemistry, dyeing, etc.). In the food industry, microencapsulation is used to improve the stability of biologically active ingredients, to extend the shelf life. Food emulsification can be used to improve taste, chewing and swallowing comfort. In addition, the emulsion incorporates (encapsulates) the nutritional components required for the intended use of the nutritional emulsion. Another known property of emulsions is that different compounds, the mixing and interaction of which are undesirable, are combined into one emulsion, in which these products remain separate in the different phases.

PCT application WO2005058476A1 (priority date 18.12.2003) and other patents of this family (European patent EP1702675B1, US patent US8168225B2) disclose the invention related to microcapsules and a continuous water-in-oil-in-water microencapsulation process, and to an emulsion surface polymerization process. The preparation consists of a continuous aqueous phase comprising a dispersion of microcapsules as oil droplets, and inside each drop of the oil phase (optional oil-soluble substances) there is a water dispersion, an aqueous extract or a water-dispersible substance or a water-soluble substance. The oil droplets are encapsulated in natural polymerizable materials as an outer shell. Such microcapsules are suitable for spray-drying and use in the form of dry powder, lyophilized, self-emulsifying powder, gel, cream and any liquid. The active compounds contained in the microcapsules are beneficial for health and other biological purposes. Such compositions are suitable for use in any type of food, especially in the manufacture of nutritional drugs as well as cosmetic products (such as rejuvenating creams, anti-wrinkle creams, gels, bath and shower accessories and sprays). The preparations are sufficient to stabilize the compounds added to food, microbial growth media and food supplements, especially those which are readily degradable or oxidizable.

The formulation of the Water-Oil-Water (WOW) structure and the encapsulation of the ingredients in it have been known for a long time. For example, the US patent US4254105A (priority date 11/10/1975, expired 1998) describes a multiple emulsion having a dispersible form of Water/Oil/Water (WOW) phase, and the method of its preparation, as well as cosmetics based on such the emulsion, in which said emulsion is used as the main form, and the emulsion consists of a dispersed phase and a dispersion medium in which the dispersed phase is a "water-in-oil" emulsion. Also, WOW emulsion is said to be an effective basic form of chemical products such as food, beverages, medicines, and a basic form of cosmetics such as creams and lotions.

According to the object of the invention, the closest patents to the present invention are Korean patent KR102020586B1 of June 22, 2017 and global application WO2011152706A1 of priority date of June 4, 2010, extended to various countries (Europe: EP2575830B1, USA: US20143730), Russia: RU201030 . These patents describe specialized nutritional complexes for people with dysphagia, where the required properties of these nutritional complexes are increased viscosity, ease of swallowing, good taste, and a balanced nutrient complex.

The invention described in the application WO2011152706A1 discloses a liquid enteral (administered via the gastrointestinal tract) nutritional composition having an energy density of 1.0 to 4.0 kcal/ml, and a viscosity of 150 to 1800 mPa s as measured at 50 $s^{-1}$ shear rate at 20°C, and comprising digestible carbohydrates and fats, wherein the composition further comprises at least one of (a1) and (a2), wherein:

(a1) 8-20g of protein per 100 milliliters of said composition, wherein the micellar casein comprises at least 50% by weight of the total protein present in the composition;
(a2) 16-45% protein with a micellar casein content of at least 50% of the protein calorific value;

and also, said composition further comprises:

(b) anionic fibers, capable of separating calcium, and
(c) carrageenan weighing 0.015-0.25g per 100ml of the composition and its use for the prevention/treatment of dysphagia and/or the treatment/prevention of malnutrition, or malnutrition associated with dysphagia.

Korean patent KR102020586B1 describes a balanced diet for the elderly with a complex extract of animals and plants origin, and the method of their preparation. More particularly, the present invention relates to a method for extracting nutrients and bioactive substances from a plant or plant material that neutralizes the specific aroma and taste of the duck. It is also related to a more suitable food for the elderly, which contains an extract of animal and plant complexes, which can improve the general physical characteristics of the elderly consumer associated with eating disorders, and the method of its production. According to the present invention, the main nutritional components (proteins, vitamins, minerals and others) are obtained from duck and pumpkin, by removing the specific smell and taste of duck, adding functional ingredients (saponins, polyphenols and others). Such foods help maintain public health by providing older people with balanced foods with better chewing and swallowing properties, with ginseng and other bioactive extracts that have a positive effect on aging. This food is produced using farm-grown products, which also helps to maintain the local economy and a stable workforce.

However, these sources do not reveal or do not sufficiently reveal how efficiently these food products are digested and their components are absorbed by the body. The process of food digestion and bioavailability of food components is complex, involving different enzymes. Different food components such as proteins, fats and carbohydrates are digested in different phases of gastrointestinal tract, and the majority of nutrients are properly absorbed by the body while their are released in the small intestine.

The review of the closest sources to the present invention shows that there are emulsified and microencapsulated (e.g., in W1/O/W2 microcapsules) products which have a longer shelf life of the encapsulated compound with improved taste (WO2005058476A1). However, it is important, for example, for the elderly or patients to have a complete and balanced diet - that is, to include proteins, fats, carbohydrates, vitamins, microminerals - however, such a balanced complex is not disclosed in emulsion or microencapsulation form. Other patent sources (WO2011152706A1, KR102020586B1) report on optimal nutritionally balanced food complexes for the elderly and patients with swallowing disorders - mixtures, liquid preparations with a balanced nutritional composition and increased thickness/viscosity to make them easier to swallow (for example, adding proteins to thicken texture similar to the sour cream), which significantly improves the diet and eating process of this group of people. However, in these mixtures, the nutrients are not structured to be optimally digested and assimilated in taget places of gastrointestinal tract during of digestion.

One more patent EP1935258B1 discloses a W1/O/W2-type composite emulsified dressing, for example, mayonnaise base, and a method for the preparation thereof. However, the EP1935258B1-disclosed W1/O/W2 composite includes nutrient components, which are not adapted by their purpose for elderly people and patients with dysphagia, which is important to supply these consumers with a necessry complex of nutrients, vitamins and bio-active components. Furthermore, this WOW-type dressing does not relate to the importance of gradual release and assimilation of the nutrients in the gastrointestinal tract, but mostly to taste properties.

There are patent documents CA3122323A1, JP3257983B2, US10583097B2, disclosing liquid concentrates, beverages, or drinks, adapted for people with dysphagia for easier swallowing. However, these documents do not disclose any specific WOW-structures, loaded with a specialized complex of nutrients, which would be at the same time sufficiently nutritious, easy to swallow and also providing an optimized disintegration of the WOW-structure, release of nutrients and assimilation thereof, during the gastrointestinal digestion phases in real time.

One more international PCT application WO2018178270A1 discloses a milk replacement composition for feeding calves, of glucose encapsulated in a double emulsion E1/H/E2, wherein E1 and E2 are aqueous phases and H is a lipid phase, and wherein the E1 phase comprises glucose molecules. The invention also relates to a milk replacement composition comprising said double emulsion E1/H/E2 and the method for obtaining such a composition. This document is relevant to the present invention only by using WOW-encapsulation of nutrients, however, it is different, at least, by use thereof for feeding calves, and by nutrient components included into the double emulsion.

Therefore, the present invention emphasizes a lack of a food products and/or product groups which:

- would include a balanced diet of nutrients appropriate for human consumption, in particular, for the elderly and patients for whom a complete balanced diet is essential;
- their nutritional components would be structured according to the target places of the food digestion and assimilation in the body. Also, incompatible products (for example, proteins and berry extracts) would be structurally separated to avoid undesirable or indigestible compounds;
- the product would be easy to swallow and would have a viscosity which would be optimal for feeding the elderly and patients with mild or more severe swallowing disorders (dysphagia);
- the product would have a sufficiently long shelf-life, retaining the bio-active substances (vitamins, microminerals), could be used as a food ingredient or a condiment in other meals (such as porridge, protein shakes and the like), and would not lose its structure and viscosity/consistency properties at higher temperatures, or in various nutrient media (preparing, providing this product as a meal additive, with various meals).

SUMMARY OF INVENTION

The present invention discloses a multiple "water-oil-water" (WOW) emulsion according to claim 1, having a structure and nutrient components that provide a viscous, easy-to-swallow texture, stability of bioactive compounds during their manufacture and storage, and controlled gradual release of them during the digestion.

The structure of the WOW emulsion is filled with a complex of nutrients, the nutritional and energy value of which is more adapted or optimized for the elderly, taking into account changes in their appetite, taste perception, swallowing, nutrient needs changes, and to avoid malnutrition. Nevertheless, this product can be used also by other people whose age and health condition are not critical, so this product is already recommended for use.

The novelty of the present invention is the easy-to-swallow texture of the emulsion and the stable three-immiscible phase structure consisting of macro- and micro- food components required by the elderly, which allows to control the release of nutrients in the consumer's body. The special distribution of macro- and micro-food components in the three phases of the WOW emulsion further improves the viscosity, swallowing and long-term preservation properties of the components, especially bioactive ones. The distribution of proteins in the external aqueous (W2) phase, the concentration of fats and lipophilic vitamins in the intermediate oil (O) phase, and the addition of carbohydrates, hydrophilic vitamins, microminerals and other bioactive compounds in the internal aqueous (W1) phase provide such a synergistic effect that the complex of elements in WAW, and absorption phases thereof are ballanced for controlled gradual release of nutrients in the gastrointestinal tract, is more viscous and easier to swallow, making it suitable for consumers with swallowing disorders, and can be eaten as a balanced nutritional supplement with other meals. Double emulsion for the elderly encapsulates the main bioactive components they need in different WOW phases of the emulsion. The inner aqueous phase (W1) is filled with hydrophilic vitamin B9, vitamin B12, vitamin C, and anthocyanin-rich black chokeberry extract (BCPE). The oil phase (O) is supplemented with lipophilic vitamin A and vitamin D3. Milk proteins and polyglycerol polycinoleate were used as hydrophilic and lipophilic emulsifiers, respectively, in the outer aqueous phase (W2). The overall stability of the micronutrient-filled emulsion is determined by keeping it for 30 days.

The process and efficiency of emulsion uptake in the body and the release kinetics of bioactive compounds were investigated during the *in vitro* digestive degradation of the emulsion. Simulated gastrointestinal activity is used in many areas of the food and nutrition sciences because human testing is often expensive, resource-intensive, and ethically controversial. In the development of foods for elderly consumers, the *in vitro* digestive degradation and characterization of micronutrients released from loaded double emulsions is essential to assess the properties of the product up to the final phase of its assimilation by the body.

The present invention solves problems and obtains the following effects:

- Supplementation of food with microcomponents depends on the composition, properties and technological parameters of the product. The major disadvantage of the known methods of adding micronutrients to food is that it is difficult to ensure an even distribution throughout the food batch, and that large losses of micronutrients are obtained during the technological process. The solution is: to encapsulate micro-components into WOW emulsions.
- Another problem in the development of products supplemented with microcomponents is the lack of data on the assimilation of microcomponents from the product. Therefore, little is known about micronutrient-fortified foods that have been scientifically proven to have health effects, although scientific knowledge about the properties and health benefits of individual microcomponents is sufficient.
- Although micro-nutrients-supplemented foods are known, they are not viscous enough to be used safely by patients with more significant dysphagia (swallowing disorder). The viscosity of said foods is adjusted by the addition of thickeners. In products for the elderly, the composition of macro- and micro-components is controlled by selecting raw materials and adding the required amount of components, estimating their losses during production and storage.
- Physiological changes associated with aging, altered taste and smell, decreased appetite, and difficulty swallowing often result in lower food intake among the elderly. Other problems are common in the elderly, such as depression, loneliness, poverty, social exclusion and cognitive impairment, which lead to malnutrition. The developed emulsion helps to prevent malnutrition in the elderly, because its development takes into account changes in appetite, taste perception, swallowing, nutrient needs in old age.
- Micronutrients (vitamins and minerals) are necessary for the body's metabolism and vital functions, and as the body ages, their deficiency adversely affects physical and mental functions of the body. The amount of micro-components in this emulsion ensures that the daily requirement of nutrients is satisfied when eating foods with this emulsion, so there is no need to use vitamin and mineral preparations and food supplements.

DESCRIPTION OF DRAWINGS

Some important aspects of the invention are explained in the drawings and graphs. The drawings and graphs are an integral part of the detailed description and are provided as a reference to a possible implementation or visual explanation of the invention, but not limiting the scope of the invention.

Fig. 1.   Double-emulsion without nutrient components (A), particle size distribution of nutrient-filled double-emulsion (B), and microstructure of the filled double-emulsion (C), by time function, in the stomach (G) and intestine (D), *in vitro* digestion:

(0) - before digestion;
(G120) - gastric phase after 120 minutes of digestion,
(D5) - duodenal phase in the 5-th minute,
(D120) - duodenal phase after 120 minutes of digestion.

Fig. 2   Release of vitamins and anthocyanins from the double emulsion as a function of time during *in vitro* digestion of the gastric phase (G) and intestinal phase (D):

(G120) - gastric phase after 120 minutes of digestion,
(D5) - duodenal phase at the 5-th minute,
(D120) duodenal phase after 120 minutes of digestion.

The values in the graph are presented as mean±standard deviation; lower-case letters indicate significant ($p < 0.05$) differences between differen stages of *in vitro* digestion.

DETAILED DESCRIPTION OF INVENTION

The structure of the formulated double-emulsion (DE), its components, production aspects, and the results of the study of the obtained DE properties are described in detail below.

**Preferred embodiment.** Composition and structure of the "water-oil-water" emulsion (W1/O/W2):

- Phase W1 comprises chokeberry extract, vitamin C, vitamin B9, vitamin B12, zinc, selenium;
- Phase O comprises rapeseed oil, vitamin A, vitamin D3;
- Phase W2 comprises milk protein.

Total nutritional composition:

- Milk protein - 12g/ 100g;
- Fat - 33g / 100g;
- Chokeberry pomace extract - 2g/ 100g;
- Vitamins and micro-elements:

    ◦ A - 400µg/100g;
    ◦ D3 - 40 g/100g;
    ◦ C- 40 mg/100g;
    ◦ B12-2000 µg/100g;
    ◦ B9 - 1600 µg/100g;
    ◦ zinc - 28 mg/100g;
    ◦ selenium - 120 µg/100g.

The distinctive features of the developed double-emulsion (DE) from other similar products on the market for similar purposes - natural taste, easily digestible proteins, necessary micronutrients: minerals, vitamins and polyphenols, and the required viscosity.

**Components of the emulsion.** The components listed below and their amounts compose one of the possible product embodiments developed and tested in the laboratory. However, the following components and their amounts do not limit the present invention, both in terms of the content of the materials and the proportions of the composition:

- Distilled water;
- Milk protein concentrate with 80.0% protein, 1.5% fat and 5.0% carbohydrates is used as a water-soluble emulsifier;
- Polyglycerol polycinoleate (PGPR), used as a lipophilic emulsifier;
- Refined rapeseed oil was used for the oil phase;
- Sodium chloride (> 99.7%);
- Sucrose.

Fresh black chokeberry pomace, after pressing is frozen, ground and defatted. Black chokeberry pomace extract (BCPE) was obtained by extracting with ethanol (EtOH) compressed to 10.3 MPa.

The emulsion structure was filled with the vitamins: vitamin A palmitate - 1MIU/g in oil, vitamin D3 - 1MIU/g in oil, 99.9%-pure folic acid powder and 0.1%-vitamin B12 powder, 99.9%-pure vitamin C powder, selenium and zinc salts.

**Preparing the emulsions:** Two types of double emulsions (DE) are prepared:

- - Non-filled double emulsion (DE) produced without berry pomace extract, vitamins and micro-minerals;
- - Filled double emulsion (DE), produced with berry pomace extract, minerals, and water-soluble vitamins in the internal water phase (W1), and fat-soluble vitamins in the oil phase (O).

For this purpose, two types of internal water phases (W1) were produced:

- 0,5 g / 100 g of sodium chloride dissolved in distilled water (for the non-filled DE);
- 0.5 g/100g of sodium chloride, 35g/100g of BCPE, 27mg/100g of folic acid, 16650mg/100g of vitamin B12, and 2670 mg/100g of vitamin C were dissolved in distilled water (for the filled DE).

For the oil phase (O), 3g/100g of polyglycerol polyricinoleate (PGPR) was distributed in rapeseed oil (for the non-filled DE). Fat-soluble vitamins (7mg/100g of vitamin D and 12mg/100g of vitamin A) were added to the filled emulsion without polyglycerol polyricinoleate (PGPR). The oil phase (O) was heated with stirring at 50°C for 30 minutes, then cooled to the room temperature.

For the external aqueous phase (W2), a 14g/100g milk protein solution was used. To prepare the primary emulsion, the internal aqueous phase (W1) was mixed with the oil phase (O) in a ratio of 20:80 by weight, and homogenized for 8 minutes at 15,000 rpm. The resulting primary emulsion was then mixed with the external aqueous phase (W2) in a ratio of 30:70 by weight, and homogenized for 5 minutes at a lower speed of 11,000 rpm.

Both prepared emulsions (the non-filled DE and the filled DE) contained 12.0% of protein and 33.0% of fat. These freshly prepared DEs were further used to prepare a high protein yoghurt type product.

The following **characteristics** of the prepared DEs were examined:

Determination of gravitational stability. DE was transferred to 25 ml glass tubes and stored at 4°C for 30 days, while monitoring the separation of phases.

Droplet size and distribution. The average oil droplet size and distribution were determined with a laser diffraction spectrophotometer using the following parameters: 1.45 - droplet refractive index; 1.33 - water refractive index; 0.01 - absorption. The results are expressed as the mean-diameter of the sphere by volume (d [4,3]). All measurements were repeated at least three times.

Rheological characteristics were measured at 25°C using a rheometer with a plate-to-plate system (diameter 20 mm, gap 1 mm). The displacement speed was increased from 0.1 to 500 s$^{-1}$. Data were analyzed using the Herschel-Bulkley model, and the viscosity coefficient (K), ultimate displacement stress ($\tau_0$), and flow index (n) were calculated.

Encapsulation efficiency and stability. Encapsulation Efficiency (EE) is calculated as the ratio of the amount of a certain compound (Cy-3-galactoside or water-soluble vitamins) incorporated into the internal aqueous phase (W1) to its amount added to the emulsion. Encapsulation Stability (ES) is calculated as the ratio of the amount of a given compound remaining in the closed internal water phase (W1) to its originally added amount. To break up the emulsion, 9g of emulsion and 36 g of NaCl solution (5.84 g/l) were weighed into a centrifuge tube and centrifuged for 30 minutes at 3000 rpm. The separated lower aqueous phase was collected and filtered. EE and ES are calculated using the following equations:

$$EE = \frac{(C_{in} - C_{fday0})}{C_{in}} \times 100\% \quad (1)$$

$$ES = \frac{(C_{in} - C_{fdayx})}{C_{in}} \times 100\% \quad (2)$$

where $C_{in}$ is the amount of a particular compound initially added to the emulsion, $C_{fday0}$ is the amount of a particular compound found in the supernatant, $C_{fdayx}$ is the amount of a particular compound found in the supernatant after storage at 4°C in a refrigerator for x days.

The amount of oil-soluble vitamins was measured by the completed enzymatic hydrolysis of DE. For this purpose, 5g of DE was mixed with 5ml of a 0.004% solution of pepsin in water, 200μL 6M HCl, 10ml of water, the pH was adjusted to 2.7 and kept at 37°C for 2 hours in a water bath. 15ml of lipase (0.82g in 30 ml) and pancreatin solution (0.3g in 30 ml) were then added, the pH was adjusted to 6.6 using 800μL of 2N NaOH, and the samples were kept at 37°C in the water bath for 3 hours.

The EE and ES of oil-soluble vitamins were calculated according to the following equations:

$$EE = \frac{C_{fday0}}{C_{in}} \times 100\% \quad (3)$$

$$ES = \frac{C_{fdayx}}{C_{in}} \times 100\% \quad (4)$$

where $C_{in}$ is the amount of the particular compound initially added into the emulsion, $C_{fday0}$ is the amount of the particular compound determined in the oil phase after preparation, $C_{fdayx}$ is the amount of the particular compound determined in the oil phase after storage in a refrigerator at 4°C for x days.

**Imitating digestion of the emulsion.** Simulated *in vitro* digestion was performed with the prepared DEs to evaluate the degradation of the emulsion structure and the release of the bioactive components. The study was performed according to the static *in vitro* digestion protocol Infogest. Seven test-tubes were used to obtain the digestion profile, and in them the digestion process was stopped after 5, 60 and 120 minutes in the gastric phase (G5, G60 and G120), and 125, 180, 210 and 240 minutes in the intestinal phase (D5, D60, D90 and D120), respectively. Gastric phase samples were neutralized to pH 7.0±0.1, and the digestive process of intestinal phase samples was stopped by cooling in ice water to 0-4°C. After the reaction was stopped, the samples were centrifuged at 4000rpm. in +4°C temperature and filtered. The soluble digestive fraction was collected, frozen and stored at -18°C until analysis. Morphological changes in the samples were assessed using polarized light microscopy. Particle size, degree of proteolysis and lipolysis, content of anthocyanins, vitamins A, D, B12, B9 and C were also determined.

**Results.** The developed DEs are described in several essential aspects: encapsulation stability and efficiency, physicochemical changes during storage, degradation of the DE structure during *in vitro* digestion simulation, release kinetics of bioactive substances.

The structure of DE is very complex and easily degraded during its production and storage. Successful stabilization of bioactive compounds is possible only in the presence of stable DE. Studies of gravitational stability, droplet size and distribution, rheological characteristics showed that the non-filled and filled DEs were stable for 30 days. The data are presented in Table 1. The first signs of instability in both emulsions were observed 30 days after their preparation - gravitational stability was 96.0% for the filled emulsion and 99.2% for the non-filled DE. During storage, a small increase in the size of the non-filled DE droplets and a decrease in the filled DE were observed. This could be influenced by marked differences in DEs viscosity.

The Herschel-Bulkley equation was adapted according to the rheological behavior of the DEs studied. The maximum viscosity coefficient and the maximum shear stress were calculated for non-filled DE immediately after preparation, this emulsion shows the lowest values of K and $\tau_0$ and the highest values of n, thus indicating lower pseudoplasticity. Such differences may be due to the high content of pectin in the berry pomace extract present in the internal aqueous phase of the emulsion. During storage, the viscosity coefficients and ultimate shear stresses of both emulsions decreased significantly (p>0.05). The migration of dissolved molecules and water from the internal water phase to the external through the oil phase may be the reason for this, also may determine changes in droplet size during storage. Although the viscosity decreased during storage, no water or oil release was observed.

**Table 1.** Physical properties of DE during storage (up to 30 days).

| Sample | Storage duration, days | | | | |
|---|---|---|---|---|---|
| | 1 | 3 | 7 | 14 | 30 |
| | *Gravitational stability, %* | | | | |
| **Non-filled DE** | 100±0.00aB | 100±0.00aB | 100±0.00aB | 100±0.00aB | 99.2±0.03 bA |
| **Filled DE** | 100±0.00aB | 100±0.00aB | 100±0.00aB | 100±0.00aB | 96.0±0.05 aA |
| | *K, Pa s$^n$* | | | | |
| **Non-filled DE** | 3.04±0.21a D | 2.21±0.15a C | 1.83±0.48a C | 1.17±0.00a B | 0.45±0.01a A |
| **Filled DE** | 12.70±0.55 bB | 13.92±0.14 bB | 16.21±0.74 bC | 10.53±0.73 bA | 10.12±1.07 bA |
| | *n* | | | | |
| **Non-filled DE** | 0.58±0.09a A | 0.61±0.01b A | 0.59±0.01b A | 0.62±0.07b A | 0.76±0.01b B |
| **Filled DE** | 0.50±0.05a BC | 0.53±0.03a C | 0.47±0.01a BC | 0.48±0.00a BC | 0.41±0.02a A |
| | *$\tau_0$, Pa* | | | | |
| **Non-filled DE** | 4.25±0.12a E | 1.54±0.18a D | 0.86±0.06a C | 0.33±0.04a B | 0.01±0.00a A |
| **Filled DE** | 52.09±2.11 bD | 40.95±3.56 bC | 21.45±2.54 bB | 8.41±0.32b A | 6.06±0.0 bA |
| | *$R^2$* | | | | |
| **Non-filled DE** | 0.993 | 0.999 | 0.999 | 0.999 | 0.998 |
| **Filled DE** | 0.939 | 0.958 | 0.988 | 0.999 | 0.981 |
| | *Apparent viscosity at displacement speed 50 s$^{-1}$, Pa·s* | | | | |
| **Non-filled DE** | 0.629±0.01 3aD | 0.585±0.00 2aC | 0.527±0.00 9aD | 0.333±0.00 1aB | 0.120±0.00 2aA |
| **Filled DE** | 3.350±0.15 6bE | 2.875±0.06 4bD | 2.655±0.03 5bC | 1.615±0.10 6bB | 1.160±0.00 0bA |
| | *Droplet size ($d_{43}$), $\mu$m* | | | | |
| **Non-filled DE** | 61.66±0.93 bAB | 65.80±2.31 bB | 62.10±1.94 bAB | 64.11±2.16 bAB | |

(continued)

| | Droplet size ($d_{43}$), $\mu m$ | | | | |
|---|---|---|---|---|---|
| Filled DE | 37.65±0.77 aC | 31.02±1.03 aA | 31.34±1.03 aA | 32.53±0.59 aB | - |
| | Span | | | | |
| Non-filled DE | 2.588 | 2.575 | 2.909 | 3.827 | - |
| Filled DE | 4.650 | 4.046 | 3.674 | 4.565 | - |
| Values are presented as mean±standard deviation; Lowercase letters indicate significant (p<0.05) differences in the characteristics of non-filled and filled DE, and uppercase letters indicate significant (p<0.05) differences in the characteristics of DE during the storage period. | | | | | |

In order to obtain a therapeutical benefit from the DEs loaded with bioactive compounds, these compounds must be stable during technological process and shelf-life. In this study, the initial encapsulation efficiency (EE) and encapsulation stability (ES) after 14 and 30 days of storage at 4°C were used as indicators of emulsion stability and efficiency (Table 2). In the newly prepared DE, the encapsulation efficiency of anthocyanins, vitamins A and D was more than 90%, and the encapsulation efficiency of water-soluble vitamins was lower. The anthocyanin encapsulation stability remained at 95.98% during the study period, indicating that DE is a promising system for anthocyanin encapsulation. Although baseline EE values for water-soluble vitamins were quite similar, between 76 and 84%, but ES trends differed during storage. The ES of vitamin C changed the least, B12 also decreased slightly, and the concentration of encapsulated vitamin B9 decreased significantly after 14 days of DE storage from 75 to 50% and after 30 days to 45%. The inclusion of vitamins A and D3 in the DE oil phase protected them during storage. The emulsifier PGPR can interact with vitamin D and thus increase the efficiency of emulsion encapsulation. The stability of vitamin A may have been determined by the presence of polyphenolic antioxidants from berry pomace extract as well as presence of vitamin C in the internal aqueous phase of DE. Chokeberry pomace extract loaded into the internal aqueous phase of DE inhibits lipid oxidation, which explains the stability of vitamin A during storage.

**Table 2.** Encapsulation efficiency (EE) and encapsulation stability (ES) in the filled DE.

| Component | Encapsulation efficiency % (EE), | Encapsulation stability (ES), % | |
|---|---|---|---|
| | | After 14 days of DE storage | After 30 days of DE storage |
| Anthocyanins (based on cy-3-galactoside) | 96.56±0.04a | 96.22±0.14b | 95.98±0.41b |
| Vitamin C | 76.63±0.79a | 75.63±0.83ab | 74.00±0.81b |
| Vitamin B9 | 75.00±0.88a | 50.00±0.85b | 45.00±0.87c |
| Vitamin B12 | 84.00±2.12a | 83.60±1.98a | 78.00±2.08b |
| Vitamin A | 99.37±5.93a | 93.75±6.19a | 90.00±7.32a |
| Vitamin D3 | 98.52±10.43a | 69.57±12.30b | 78.26±11.90b |
| Values are the mean of three independent samples ±SD; lower-case letters indicate significant (p<0.05) differences in DE characteristics during the storage period. | | | |

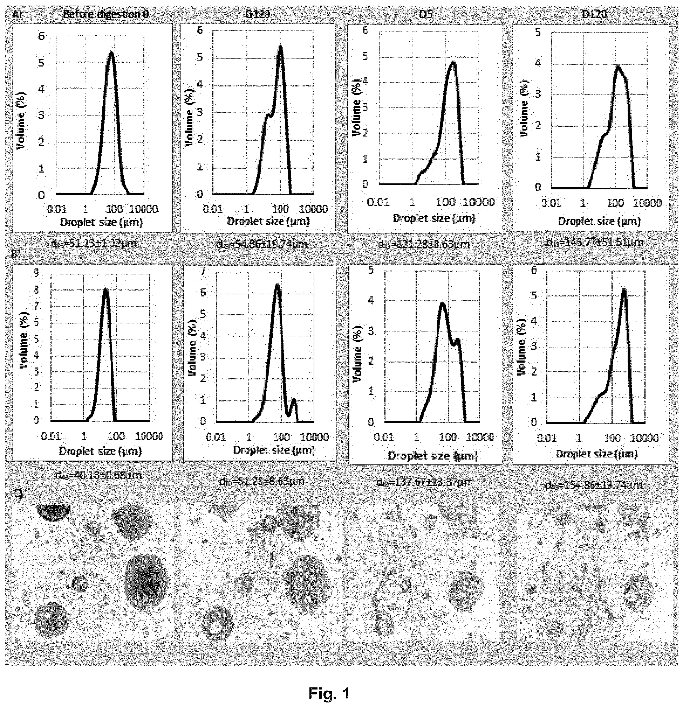

Degradation of DE during *in vitro* digestion. The size distribution and microstructure of non-filled and filled DE droplets at different stages of digestion are shown in Figure 1. Non-filled and filled DE showed the same particle size distribution at digestive simulation points. When comparing gastric phase samples, no significant differences were observed between the mean oil droplet size (d43) of non-filled and filled DE. At the very beginning of the duodenal digestive phase, changes in the DE particle size distribution were observed (D5). The addition of duodenal fluids containing surfactants such as lipase, phospholipids, and gall salts resulted in a greater droplet distribution. At the end of the duodenal phase, the droplet size increased further and the mean size (d43) of the non-filled emulsion was 146.77±51.51μm and that of the filled emulsion was 154.86±19.74μm.

Figure 1c presents a microscopic image of the filled DE at different digestion points. At the starting point, water droplets are seen being surrounded by an oil phase that is distributed in the outer water phase. At the end of the gastric phase (G120), DE droplets can still be seen. Single drops of oil with larger internal water droplets were visible until the end of the digestive phase of the duodenum (D120).

A study of protein and lipid hydrolysis during *in vitro* digestion was performed to elucidate the effect of the DE degradation process on the release of hydrophilic and hydrophobic bioactive compounds from different DE phases. The results are presented in Table 3.

Table 3. Hydrolysis of proteins and fats in-vitro in the gastric (G) and intestinal (D) phases.

| Digestion phase | Degree of proteolysis (%) | | Degree of lipolysis (%) | |
|---|---|---|---|---|
| | Non-filled DE | Filled DE | Non-filled DE | Filled DE |
| G5 | 10.61±1.39a | 10.99±0.74a | - | - |
| G60 | 12.80±1.89a | 15.16±1.85a | - | - |
| G120 | 21.14±1.47a | 19.72±1.01a | - | - |
| D5 | 52.21±1.40b | 49.99±1.75b | 9.0±3.25a | 7.2±2.25a |
| D60 | - | - | 15.0±4.86a | 12.8±2.98a |
| D90 | - | - | 46.0±5.48a | 41.2±4.86a |
| D120 | 52.21±1.68b | 49.68±1.45b | 79.0±6.54a | 65.0±5.24b |

Values are presented as mean ±standard deviation; lower-case letters indicate significant (p<0.05) differences between characteristics of non-filled and filled DEs.

During the digestion period of DE, no significant differences were found between the degree of proteolysis of non-filled and filled DE. Protein hydrolysis began immediately after the addition of gastric fluids (G5) to the DE and gradually increased to 120 min. At the beginning of the intestinal phase (D5), protein degradation was significantly increased, but further incubation with intestinal fluids no longer affected the degree of proteolysis. The hydrolysis profiles of non-filled and filled DE lipids during the first 60 minutes of the duodenal phase were similar. However, further incubation under intestinal conditions showed significant (p<0.05) differences in lipid digestion: the degree of lipolysis of the filled DE was lower, indicating a slower hydrolysis of the oil. This can be explained by the difference in viscosity, because with a more viscous DE, the access of lipase to the surface of the oil droplets can be inhibited, resulting in a slower digestion of lipids.

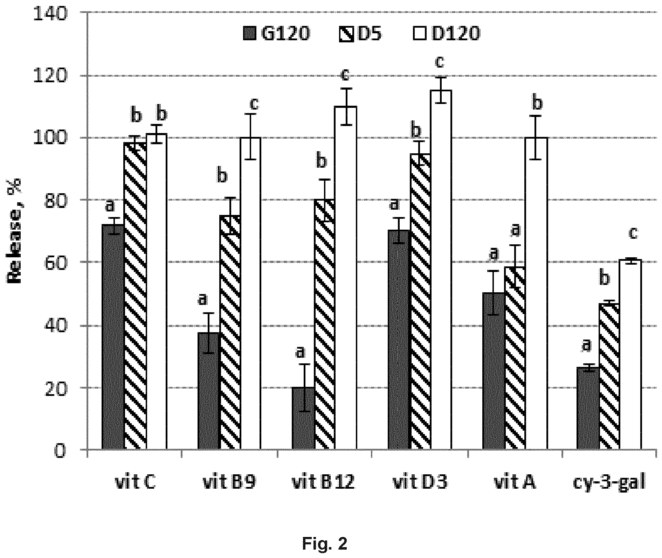

The release kinetics of bioactive compounds embedded in different DE phases were also measured. These data are presented in Figure 2 as the ratio of the amount of individual bioactive compound found in the liquid digestive phase to the amount of compound incorporated into DE. At the end of the duodenal phase, approximately 100% of the vitamins were released. However, the release kinetics of different vitamins in the gastrointestinal tract differ. Vitamin C is excreted very rapidly under gastric conditions; At G120, 71.75% of the added vitamin C was released. At the beginning of the intestinal phase, the amount of released vitamin C was about 98%. The release of vitamins B9 and B12 at the end of the gastric stage was significantly lower: 37.5% and 20%, respectively. At the beginning of the duodenal stage, 75-80% of these vitamins were released and their excretion continued to increase. During the gastrointestinal phase, about 70% of vitamin D3 and about 50% of vitamin A were released during the gastric digestion of vitamins embedded in the DE oil phase. The release of these vitamins continued to increase. A relationship between structural changes in DE and vitamin excretion during the simulated digestive process can be observed. The results show that the degradation of the DE structure was limited in the gastric phase and enhanced by the addition of duodenal fluids. Cy-3-galactoside was selected as the predominant anthocyanin in the chokeberry extract extract, so the release of anthocyanins was evaluated for this compound. After 120 minutes of incubation with gastric fluids, 26.38% of cy-3-galactoside was released from the DE, and 46.95% was released from the internal aqueous phase of DE after the addition of intestinal fluids. Further incubation of DE with duodenal fluids resulted in additional release of cy-3-galactoside, but complete release of cy-3-galactoside from DE after 120 minutes was not achieved. Research shows that anthocyanins break down longer in duodenal fluids due to their interaction with proteins and polyphenols.

The results show that the generated DE can limit the excretion of vitamin B9, vitamin B12 and anthocyanins in the gastrointestinal stage and ensure the overall excretion of vitamins and moderate anthocyanin excretion in the duodenal digestion stage.

Conclusions. The six main micronutrients for the elderly were encapsulated in different phases of the double emulsion: vitamins B9, B12 and C and anthocyanin-containing black chokeberry extract were added in the in-water phase (V1) and vitamins A and D3 in the oil phase (A). Studies of gravitational stability, droplet size, and double emulsion viscosity, encapsulation efficiency of bioactive materials, and encapsulation stability show good emulsion stability and successful protection of bioactive compounds from environmental factors. In addition, *in vitro* digestion of the filled emulsion showed limited structural degradation at the gastric stage and more intense degradation with the addition of duodenal fluids. This explains the limited release of bioactive substances in the gastric phase and the almost complete release at the end of the duodenal phase. The kinetics of anthocyanin release differed from other bioactive substances. At the end of the duodenal phase, only 46.95% of the added extract was excreted. These properties of double-emulsions filled with bioactive compounds important for the elderly make them suitable for use in the elderly.

The DE was tested *in vitro* at KTU Department of Food Science and Technology and at LSMU Geriatrics Clinic under laboratory conditions *in vivo.* Summary results:

1) DE was characterized by good stability (at least 93%), oil droplets distributed in the external water phase with a size of 5 to 300$\mu$m, a viscosity of more than 1750 mPas (III level according to the National Dysphagia Dietary Guidelines), good encapsulation efficiency of active substances (at least than 97%) and a negligible change in these parameters over the 60-day retention period;

2) the disintegration of the created double emulsion structure and the release of the active substances into the juice of the gastrointestinal tract were determined by simulating the conditions in the human gastrointestinal tract;

3) after using a prototype of food product containing double emulsion for 10 days, the nutritional status of elderly patients improved - arm circumference increased, gait accelerated, vitamin B12 concentration increased, vitamin D concentration tended to increase.

**Consuming the emulsion with other products.** The DE one of the uses is mixing it with other products. For example, with yogurt, or porridge. The option of using the DE mixed with a high-protein yogurt was tested.

The ease of use of the products was studied in a target group of geriatric patients. The group consisted of patients from the Geriatrics Department of Kaunas Clinical Hospital. Selection criteria were: advanced dysphagia requiring enteral nutrition, advanced dementia or cancer, renal, cardiac, pulmonary, or hepatic failure. Geriatric patients evaluated the high-protein yogurt-type product. Most patients were satisfied with the swallowing comfort, texture and taste of the developed product. All patients felt comfortable eating and almost all were satisfied with the formation of a swallowing bite. Only one patient experienced pain while eating. Consumers did not find the product to be sticky, firm or greasy. In their opinion, the taste of the food was not particularly pungent. After consumption of the created food for 10 days, the nutritional status of elderly patients improved - arm circumference increased, gait accelerated, the concentration of vitamin $B_{12}$ increased, the concentration of vitamin D tended to increase. The change in arm volume was greater than with a commercial product. All subjects tolerated the product well.

Adding the bio-actives-filled-DE to high protein yoghurt is an appropriate strategy for the production of nutrient-fortified foods for the elderly. Such a product contributes to meeting the protein and vitamin needs of the elderly and does not contain excess nutrients that are restricted to this group of consumers. Geriatric patients described the developed product as "comfortable" due to good swallowing and hydration and good texture properties of the product. The stability of encapsulated vitamins during the technological process and during 20 days of storage shows the successful protection of vitamins from environmental factors. During the *in vitro* digestion period, complete excretion of vitamins was observed at the end of the duodenal phase (approximately 100%), and complete excretion of polyphenols was not achieved and accounted for only 13.96% of the total anthocyanin content in products filled with double emulsion. The results have shown that DE supplemented with bioactive substances is a suitable means of fortifying yoghurt-type products with a high protein content, and that the berry pomace extract is better incorporated being in non-emulsified form.

LIST OF NON-PATENT CITATIONS

[1] M. Kheynoor, S.M.H. Hosseini, G.H. Yousefi, H.H. Gahruie, G.R. Mesbahi, Encapsulation of vitamin C in rebaudioside-sweetened model beverage using water in oil in water double emulsions, LWT Food Sci. Technol., 2018, 96, 419 -425.

[2] Ding, C.A. Serra, T.F. Vandamme, W. Yu, N. Anton, Double emulsions prepared by two-step emulsification: History, state-of-the-art and perspective, J. Control Release., 2019, 295, 31 - 49.

[3] American Dietetic Association, National Dysphagia Diet -Standartization for optimal care, NDDTF, 2002, 47.

[4] L. Sura, A. Madhavan, G. Carnaby, M.A. Crary, Dysphagia in the elderly: management and nutritional considerations, Clin. Interv. Aging, 2012, 7, 287 - 298.

[5] P. Gharehbegloua, S.M. Jafaria, A. Homayounib, H. Hamishekarc, H. Mirzaeia, Fabrication od double W1/O/W2 nano-emulsions loaded with oleuropin in the internal phase (W1) and evaluation of their release rate, Food Hydrocoll., 2019, 89, 44 - 55.

[6] M. Matos, G. Gutiérrez, L. Martínez-Rey, O. Iglesias, C. Pazos, Encapsulation of resveratrol using food-grade concentrated double emulsions: Emulsion characterization and rheological behaviour, J. Food Eng., 2018, 226, 73 - 81.

[7] N.P. Aditya , S. Aditya , H. Yang , H.W. Kim , S.O. Park , S. Ko, Co-delivery of hydrophobic curcumin and hydrophilic catechin by a water-in-oil-in-water double emulsion, Food Chem., 2015, 173, 7 - 13.

[8] H. Carrillo-Navas, J. Cruz-Olivares, V. Varela-Guerrero, L. Alamilla-Beltrán, E.J. Vernon- Carter, C. Perez-Alonso, Rheological properties of a double emulsion nutraceutical system incorporating chia essential oil and ascorbic acid stabilized by carbohydrate polymer-protein blends, Carbohydr. Polym., 2012, 87, 1231 - 1235.

[9] M. Matos, G. Gutiérrez, O. Iglesias, J. Coca, C. Pazos, Enhancing encapsulation efficiency of food-grade double emulsions containing resveratrol or vitamin B12 by membrane emulsification, J. Food Eng., 2015, 166, 212 - 220.

[10] V. Eisinaite, D. Juraite, K. Schroën, D. Leskauskaite, Preparation of stable food-grade double emulsions with a hybrid premix membrane emulsification system, Food Chem., 2016, 206, 59 - 66.

[11] H.J. Giroux, S. Constantineau, P. Fustier, C.P. Champagne, D. St-Gelais, M. Lacroix, M. Britten, Cheese fortification using water-in-oil-in-water double emulsions as carrier for water soluble nutrients, Int. Dairy, J., 2013, 29, 107 - 114.

[12] J. Andrade, M. Corredig, Vitamin D3 and phytosterols affect the properties of polyglycerol poliricinoleate (PGPR) and protein interfaces, Food Hydrocoll., 2016, 54, 278 - 283.

[13] Y. Huang, W. Zhou, Microencapsulation of anthocyanins through two-step emulsification and release characteristics during in vitro digestion, Food Chem., 2019, 278, 357 - 363.

[14] M. Kaimainen, S. Marze, E. Järvenpää, M. Anton, R. Huopalahti, Encapsulation of betalain into w/o/w double emulsion and release during in vitro intestinal lipid digestion, LWT - Food Sci. Technol., 2015, 60, 899 - 904.

**Claims**

1. A food emulsion, balanced for the elderly and patients with swallowing disorders, said food emulsion with a viscosity of 1000 to 1500 mPas, measured at a shear rate of 50 per second at 25°C temperature, saturated with nutrients and bioactive substances, comprising at least:

   - "Water-in-Oil-in-Water" (WOW) emulsion base consisting of an inner aqueous phase (W1), an oil phase (O), and an outer aqueous phase (W2), and
   - the components of the nutrients and bio-active substances incorporated in this emulsion base,

   **characterized in that** said WOW emulsion base comprises

   - the external aqueous (W2) phase filled with milk protein components,
   - the oil phase (O) filled with unsaturated lipids, lipophilic vitamins D and A,
   - the internal aqueous (W1) phase filled with carbohydrates, polyphenols, vitamins C, B9 and B12, Zn, Se, berry extracts.

2. The emulsion according to claim 1, **characterized in that** quantities of its nutritional components in WOW phases are selected within the Recommended Dietary Allowance (RDA) levels.

3. The emulsion according to claim 1, **characterized in that** its preffered embodiment comprises:

   - in phase W1: chokeberry pomace extract, vitamin C, vitamin B9, vitamin B12; Zn, Se;
   - in phase O: rapeseed oil, vitamin A, vitamin D3;
   - in phase W2: milk protein,

   wherein the nutritional composition is:

   - milk protein - 12g / 100g;
   - fat - 33g / 100g;
   - chokeberry pomace extract - 2g / 100g;
   - vitamins and microelements: A - 400µg/100g, D3 - 40µg/100g, C - 40mg/100g, B12 - 2000µg/100g, B9 - 1600µg/100g, zinc - 28mg/100g, selenium - 120µg/100g.

4. The emulsion according to claims 1 and 3, **characterized in that** its WOW structure is arranged to maintain a controlled gradual release of the nutrients and bio-active substances contained therein, during its digestion phases in the gastrointestinal tract.

5. Use of the emulsion according to claims 1 to 4, **characterized in that** it is consumed being mixed with high-protein yoghurt, by 25 parts by weight of the emulsion mixed with 75 parts by weight of the high-protein yoghurt.

6. Use of the emulsion according to claims 1 to 4, **characterized in that** it is consumed as an ingredient in hot and cold meals, such as porridge, by adding 1 to 2 parts by weight of the emulsion to 20 parts by weight of said meal.

**Patentansprüche**

1. Nahrungsemulsion, ausgewogen für ältere Menschen und Patienten mit Schluckstörungen, wobei die Nahrungsemulsion mit einer Viskosität von 1000 bis 1500 mPas, gemessen bei einer Scherrate von 50 pro Sekunde bei einer Temperatur von 25 °C, gesättigt mit Nährstoffen und bioaktiven Substanzen, mindestens Folgendes umfasst:

   - eine auf "Wasser-in-Öl-in-Wasser" (WOW) basierende Emulsion, die aus einer inneren wässrigen Phase (W1), einer Ölphase (Ö) und einer äußeren wässrigen Phase (W2) besteht, und
   - die Komponenten der Nährstoffe und bioaktive Substanzen, die in dieser Emulsionsbasis enthalten sind,

   **dadurch gekennzeichnet, dass** die WOW-Emulsionsbasis Folgendes umfasst

   - die äußere wässrige Phase (W2), gefüllt mit Milcheiweißkomponenten,
   - die Ölphase (Ö), gefüllt mit ungesättigten Lipiden, den lipophilen Vitaminen D und A,
   - die innere wässrige (W1) Phase, gefüllt mit Kohlenhydraten, Polyphenolen, den Vitaminen C, B9 und B12, Zn, Se, Beerenextrakten.

2. Emulsion nach Anspruch 1, **dadurch gekennzeichnet, dass** Mengen ihrer Nährstoffkomponenten in WOW-Phasen innerhalb der Höhen der empfohlenen Tagesdosis (Recommended Daily Allowance RDA) ausgewählt sind.

3. Emulsion nach Anspruch 1, **dadurch gekennzeichnet, dass** ihre bevorzugte Ausführungsform Folgendes umfasst:

   - in der W1-Phase: Apfelbeerentrester-Extrakt, Vitamin C, Vitamin B9, Vitamin B12;

   Zn; Se;

   - in der Ö-Phase: Rapsöl, Vitamin A, Vitamin D3;
   - in der W2-Phase: Milcheiweiß,

   wobei die Nährstoffzusammensetzung wie folgt ist:

   - Milcheiweiß - 12g/100g;
   - Fett - 33g/100g;
   - Apfelbeerentrester-Extrakt - 2g/100g;
   - Vitamine und Spurenelemente: A - 400µg/100g, D3 - 40µg/100g, C - 40mg/100g, B12 - 2000µg/100g, B9 - 1600µg/100g, Zink - 28mg/100g, Selen - 120µg/100g.

4. Emulsion nach den Ansprüchen 1 und 3, **dadurch gekennzeichnet, dass** ihre WOW-Struktur eingerichtet ist, um ein gesteuertes allmähliches Freisetzen von darin enthaltenen Nährstoffen und bioaktiven Substanzen während der Phasen ihrer Verdauung im Magen-Darm-Trakt aufrechtzuerhalten.

5. Verwendung der Emulsion nach den Ansprüche 1 bis 4, **dadurch gekennzeichnet, dass** sie vermischt mit eiweißreichem Joghurt, 25 Gewichtsteile der Emulsion vermischt mit 75 Gewichtsteilen des eiweißreichen Joghurts, konsumiert wird.

6. Verwendung der Emulsion nach den Ansprüche 1 bis 4, **dadurch gekennzeichnet, dass** sie als eine Zutat in warmen und kalten Mahlzeiten, wie etwa Haferbrei, durch Hinzufügen von 1 bis 2 Gewichtsteilen der Emulsion zu 20 Gewichtsteilen der Mahlzeit, konsumiert wird.

**Revendications**

1. Émulsion alimentaire, équilibrée pour les personnes âgées et les patients souffrant de troubles de la déglutition, ladite émulsion alimentaire présentant une viscosité de 1 000 à 1 500 mPas, mesurée à un taux de cisaillement de 50 par seconde à une température de 25°C, saturée de nutriments et de substances bioactives, comprenant au moins :

   - une base d'émulsion « eau dans huile dans eau » (WOW) constituée d'une phase aqueuse interne (W1), d'une phase d'huile (O) et d'une phase aqueuse externe (W2), et
   - les composants des nutriments et des substances bio-actives incorporés dans cette base d'émulsion,

   **caractérisée en ce que** ladite base d'émulsion WOW comprend

   - la phase aqueuse externe (W2) remplie de composants protéiques de lait,
   - la phase d'huile (O) remplie de lipides insaturés, de vitamines lipophiles D et A,
   - la phase interne aqueuse (W1) remplie de glucides, de polyphénols, de vitamines C, B9 et B12, de Zn, de Se, d'extraits de baies.

2. Émulsion selon la revendication 1, **caractérisée en ce que** des quantités de ses composants nutritionnels dans les phases WOW sont sélectionnées dans les niveaux d'apport nutritionnel recommandés (RDA).

3. Émulsion selon la revendication 1, **caractérisée en ce que** son mode de réalisation préféré comprend :

   - dans la phase W1 : de l'extrait de marc d'aronia, de la vitamine C, de la vitamine B9, de la vitamine B12 ; du Zn, du Se ;
   - dans la phase O : de l'huile de colza, de la vitamine A, de la vitamine D3;
   - dans la phase W2 : de la protéine de lait,

   dans laquelle la composition nutritionnelle est :

   - de la protéine de lait - 12g/100g;
   - de la graisse - 33g/100g;
   - de l'extrait de marc d'aronia - 2g/100g;
   - des vitamines et microéléments : A - 400 $\mu$g/100 g, D3 - 40 $\mu$g/100 g, C - 40 mg/100 g, B12 - 2 000 $\mu$g/100 g, B9 - 1 600 $\mu$g/100 g, zinc - 28 mg/100 g, sélénium - 120 $\mu$g/100 g.

4. Émulsion selon les revendications 1 et 3, **caractérisée en ce que** sa structure WOW est agencée pour maintenir une libération progressive commandée des nutriments et des substances bio-actives qu'elle contient, lors de ses phases de digestion dans le tractus gastro-intestinal.

5. Utilisation de l'émulsion selon les revendications 1 à 4, **caractérisée en ce qu'**elle est consommée mélangée avec du yaourt hyperprotéiné, avec 25 parties en poids de l'émulsion mélangées pour 75 parties en poids du yaourt hyperprotéiné.

6. Utilisation de l'émulsion selon les revendications 1 à 4, **caractérisée en ce qu'**elle est consommée comme ingrédient dans des repas chauds et froids, tels que du porridge, en ajoutant 1 à 2 parties en poids de l'émulsion à 20 parties en poids dudit repas.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005058476 A1
- EP 1702675 B1
- US 8168225 B2
- US 4254105 A
- KR 102020586 B1
- WO 2011152706 A1
- EP 2575830 B1
- US 20143730 B
- RU 201030
- EP 1935258 B1
- CA 3122323 A1
- JP 3257983 B
- US 10583097 B2
- WO 2018178270 A1

**Non-patent literature cited in the description**

- **M. KHEYNOOR ; S.M.H. HOSSEINI ; G.H. YOUSEFI ; H.H. GAHRUIE ; G.R. MESBAHI.** Encapsulation of vitamin C in rebaudioside-sweetened model beverage using water in oil in water double emulsions. *LWT Food Sci. Technol.,* 2018, vol. 96, 419-425
- **DING, C.A. SERRA ; T.F. VANDAMME ; W. YU ; N. ANTON.** Double emulsions prepared by two-step emulsification: History, state-of-the-art and perspective. *J. Control Release.,* 2019, vol. 295, 31-49
- American Dietetic Association, National Dysphagia Diet -Standartization for optimal care. *NDDTF,* 2002, vol. 47
- **L. SURA ; A. MADHAVAN ; G. CARNABY ; M.A. CRARY.** Dysphagia in the elderly: management and nutritional considerations. *Clin. Interv. Aging,* 2012, vol. 7, 287-298
- **P. GHAREHBEGLOUA ; S.M. JAFARIA ; A. HOMAYOUNIB ; H. HAMISHEKARC ; H. MIRZAEIA.** Fabrication od double W1/O/W2 nano-emulsions loaded with oleuropin in the internal phase (W1) and evaluation of their release rate. *Food Hydrocoll.,* 2019, vol. 89, 44-55
- **M. MATOS ; G. GUTIÉRREZ ; L. MARTÍNEZ-REY ; O. IGLESIAS ; C. PAZOS.** Encapsulation of resveratrol using food-grade concentrated double emulsions: Emulsion characterization and rheological behaviour. *J. Food Eng.,* 2018, vol. 226, 73-81
- **N.P. ADITYA ; S. ADITYA ; H. YANG ; H.W. KIM ; S.O. PARK ; S. KO.** Co-delivery of hydrophobic curcumin and hydrophilic catechin by a water-in-oil-in-water double emulsion. *Food Chem.,* 2015, vol. 173, 7-13
- **H. CARRILLO-NAVAS ; J. CRUZ-OLIVARES ; V. VARELA-GUERRERO ; L. ALAMILLA-BELTRÁN ; E.J. VERNON- CARTER ; C. PEREZ-ALONSO.** Rheological properties of a double emulsion nutraceutical system incorporating chia essential oil and ascorbic acid stabilized by carbohydrate polymer-protein blends. *Carbohydr. Polym.,* 2012, vol. 87, 1231-1235
- **M. MATOS ; G. GUTIÉRREZ ; O. IGLESIAS ; J. COCA ; C. PAZOS.** Enhancing encapsulation efficiency of food-grade double emulsions containing resveratrol or vitamin B12 by membrane emulsification. *J. Food Eng.,* 2015, vol. 166, 212-220
- **V. EISINAITE ; D. JURAITE ; K. SCHROËN ; D. LESKAUSKAITE.** Preparation of stable food-grade double emulsions with a hybrid premix membrane emulsification system. *Food Chem.,* 2016, vol. 206, 59-66
- **H.J. GIROUX ; S. CONSTANTINEAU ; P. FUSTIER ; C.P. CHAMPAGNE ; D. ST-GELAIS ; M. LACROIX ; M. BRITTEN.** Cheese fortification using water-in-oil-in-water double emulsions as carrier for water soluble nutrients. *Int. Dairy, J.,* 2013, vol. 29, 107-114
- **J. ANDRADE ; M. CORREDIG.** Vitamin D3 and phytosterols affect the properties of polyglycerol poliricinoleate (PGPR) and protein interfaces. *Food Hydrocoll.,* 2016, vol. 54, 278-283
- **Y. HUANG ; W. ZHOU.** Microencapsulation of anthocyanins through two-step emulsification and release characteristics during in vitro digestion. *Food Chem.,* 2019, vol. 278, 357-363
- **M. KAIMAINEN ; S. MARZE ; E. JÄRVENPÄÄ ; M. ANTON ; R. HUOPALAHTI.** Encapsulation of betalain into w/o/w double emulsion and release during in vitro intestinal lipid digestion. *LWT - Food Sci. Technol.,* 2015, vol. 60, 899-904